# EUROPEAN PATENT SPECIFICATION

(11) **EP 4 059 393 B1**
(45) Date of publication and mention of the grant of the patent: **25.02.2026**
(21) Application number: 21162588.4
(22) Date of filing: 15.03.2021
(51) Int. Cl.: A47J 47/10, B65D 81/20

(54) **KITCHEN APPLIANCE, VACUUM VALVE AND ASSEMBLY FOR A KITCHEN APPLIANCE, AND METHOD OF APPLYING A VACUUM**
KÜCHENGERÄT, VAKUUMVENTIL UND ANORDNUNG FÜR EIN KÜCHENGERÄT UND VERFAHREN ZUM ANLEGEN EINES VAKUUMS
APPAREIL DE CUISINE, SOUPAPE SOUS VIDE ET ENSEMBLE POUR UN APPAREIL DE CUISINE ET PROCÉDÉ D'APPLICATION D'UN VIDE

(43) Date of publication of application: 21.09.2022
(73) Proprietor: BSH Hausgeräte GmbH, 81739 München (DE)
(72) Inventor: Atelsek, Darko, 3331 Nazarje (SI); Mejac, Matej, 1431 Dol pri Hrastniku (SI); Zupanc, Anze, 2380 Slovenj Gradec (SI); Simon, Davorin, 3212 Vojnik (SI)

(56) References cited:
- WO-A1-2020/192984
- KR-A- 20140 076 018
- US-A- 5 974 686
- US-A1- 2005 061 813
- US-A1- 2005 244 083
- US-A1- 2009 256 100
- US-A1- 2015 027 921

## Description

The present invention concerns a vacuum valve for a kitchen appliance. The invention further concerns a method of applying a vacuum to a food container by utilising such vacuum valve. Moreover, the present invention concerns an assembly comprising one or more vacuum valve(s) and a power unit with a vacuum pump. Furthermore, the present invention concerns a kitchen appliance comprising such assembly and a tool for treating food.

Modern kitchen appliances sometimes provide the function of a vacuum sealer. That is, they are configured to apply vacuum to a respective object (further referred to herein as "vacuumizing"), i.e., to extract air therefrom. Thereby, a storage life of a respective content (such as a comestible) of the object may be increased.

The object to be vacuumized may be a sealable container for food, with a respective adapter configured to be detachably combined, for the process of extracting air, with a power unit of the kitchen appliance, the power unit comprising the vacuum pump. Such adapter may include a vacuum valve allowing air to be sucked, by the vacuum pump, out of the container, and inhibiting air to reversely enter the vacuumized container.

US2009/2561 00A1 shows a vacuum valve according to the prior art.

It is an object of the present invention to provide a technique simplifying utilisation of a vacuumizing function of a kitchen appliance. It is a further object of the present invention to provide an improved method of applying a vacuum to a food container.

The objects are achieved by a vacuum valve according to claim 1, by an assembly according to claim 5, by a kitchen appliance according to claim 6 and by a method according to claim 8. Advantageous embodiments are disclosed in the other dependent claims, the description and the figures.

A vacuum valve according to the present invention is an accessory for/of a kitchen appliance, the kitchen appliance comprising a power unit with a vacuum pump. The vacuum valve comprises a first component, a second component and a sealing.

The second component is configured to be combined with the first component. Therein, the first and the second component can be combined with each other such that a sheet (in particular a flexible film such as a plastic foil) is at least partially arranged therebetween; that is, such that the sheet separates at least respective portions of facing (adjacent) surfaces of the first and the second component. In utilisation of the vacuum valve, the sheet may be a foil of a food container a vacuum is to be applied to, such as a foil of a sealed or sealable bag, for instance.

The second component is further configured to be detachably attached to a power unit of the kitchen appliance; in particular, the second component may preferably comprise connection means for attachment to the power unit, such as means of a tight/press fit, a bayonet connection and/or a screw thread.

By means of the sealing, the vacuum valve is configured to inhibit that air flows in a first direction (further referred to herein as "sealing direction") through an air channel within the vacuum valve. By contrast, the vacuum valve facilitates that air flows through the air channel in an opposite direction when sucked accordingly. In the following, the opposite direction (which preferably points towards the power unit when the second component is attached thereto) is also referred to herein as "sucking direction".

A method according to the present invention comprises combining the second component of a vacuum valve according to an embodiment of the present invention with the first component thereof, with a sheet of a (sealed or sealable) food container at least partially therebetween. The method further comprises attaching (before or after said combining of first and second component) the second component to a power unit of a kitchen machine, wherein the power unit comprises a vacuum pump. Moreover, the method comprises the steps of applying a vacuum to the (sealed) food container by operating the vacuum pump, and detaching the second component from the power unit (preferably while maintaining the vacuum in the food container).

The present invention thus facilitates utilisation of a vacuum pump and application of vacuum to containers which do not have to be particularly devised for such vacuumizing purpose. In particular, the containers do not itself have to provide of a specific adapter enabling their vacuumizing.

The vacuum valve according to the present invention thus widely enlarges a range of vacuumable containers. Thereby, the vacuumizing procedure becomes much more comfortable, and the vacuumizing function of the kitchen appliance is significantly more applicable for a user, as he in particular does not have to provide of dedicated containers to benefit from it.

According to advantageous embodiments of the present invention, the food container may be a sealable food box, in particular a sealable food box with a lid which may at least partially be made of plastic, or a sealable bag, in particular a plastic bag, such as a zipper storage bag. Said sheet (located at least partially between the first and the second component when these are combined with each other) may be a foil of such bag or a lid of such food box, for example.

If the food container is not yet sealed beyond the vacuum valve when the second and the first component are combined with one another, the method according to the present invention may further comprise sealing the food container (preferably before applying the vacuum), e.g., by means of a respective means such as a sealing fastener, in respective embodiments in particular a bag zipper.

Preferably, the second component of a vacuum valve according to the present invention is configured to be detachably combined with the first component, and analogously, the combining step of the method according to the present invention may be a step of detachably combining the second component with the first one.

In such embodiments, the first and the second component thus can be separated from each other, in particular after utilisation of the vacuum valve, e.g., after a vacuum of a respectively vacuumized container has been released (such as to consume the respective content); the method according to the present invention may comprise such separating of the second component from the first component.

As a consequence, according to such embodiments, the vacuum valve can be used several times, which saves material and a user's effort and storage space. Preferably, the vacuum valve is dishwasher safe.

The first and the second component may be combinable with each other by means of respective bayonet connection means. Alternatively, the first and the second component may each comprise a screw thread for detachably combining them.

According to advantageous embodiments of the present invention, the first component may preferably be configured to be introduced into an interior of a food container a vacuum is intended to be applied to. The second component may be combinable from outside of the food container with the first component.

Analogously, the method according to the present invention may further comprise introducing the first component of the vacuum valve according to an embodiment of the present invention into an interior of the food container, and/or combining the second component with the first component from outside of the food container.

When the first and the second component are combined with each other, a portion of the vacuum valve preferably encompasses a hole in the sheet, which hole is positioned in the air channel. In particular, the vacuum valve is preferably configured to seal the air channel when the first and second components are combined with each other. That is, in such combined state, the first and second component inhibit air penetrating a combination region of first and second component, such that in particular air sucked (by the vacuum pump) through the hole in the sheet cannot leak from the air channel except at the end thereof (towards the vacuum pump).

The hole may be present in the sheet prior to the act of combining the first and the second component; the method according to the present invention may comprise a step of punching the foil prior to combining the first and second components.

According to the invention. the first component and/or the second component of the vacuum valve comprise/s a punch portion configured to generate a/the hole in said sheet by punching it. The hole is thus generated by way of (thus, during) combining the first and the second component with each other. The method according to the present invention analogously comprises punching the sheet by way of combining the first and the second component, at least one of which comprises such punch portion. These features provide for a particularly comfortable utilisation and a precise positioning of the hole in the air channel. The punch portion may preferably comprise at least one air passage forming at least part of the air channel in the vacuum valve.

The sealing may preferably be moveable relative to the first and/or the second component, wherein a respective position may cause the inhibiting and/or the facilitating of the air flow, respectively. In particular, in such embodiments with moveable sealing, the respective position thereof relative to the first and/or second component may result from a respective pressure difference at different sides of the sealing in the air channel.

The sealing of the vacuum valve may comprise a grip facilitating a user to move the sealing relative to the first component and/or relative to the second component, so as to (actively) enable the (otherwise blocked) air flow in the sealing direction, thus to abolish the blocking of the air flow in the sealing direction. When such vacuum valve is used, the method according to the present invention may comprise releasing the vacuum by moving the sealing relative to the first and/or second component, respectively, by way of grasping and moving the grip. In these embodiments, the vacuum valve thus is a two-way valve which can be comfortably manipulated for releasing the vacuum. In particular, the respective food container can be preserved (without impairing it, such as by pricking) for releasing the vacuum, and it can thus be used several times, which implies saving resources, storage space and effort.

According to advantageous embodiments, the sealing of the vacuum valve is at least partially made of a (natural and/or synthetic) rubber material.

An assembly according to the present invention comprises one or more vacuum valves according to an embodiment of the present invention; in case of various vacuum valves, these may be according to different or the same embodiment/s. The assembly further comprises a power unit of a kitchen appliance, the power unit comprising a vacuum pump. Therein, the power unit is compatible with the vacuum valve/s, i.e., detachably combinable with the (respective) second component thereof.

In particular, the vacuum pump may be durably fixed or detachably fixable to a drive component of the power unit; such drive component, which may comprise an electric motor, may be configured to drive the vacuum pump, and/or may be combinable with one or more further components (such as a tool for treating food) additionally or alternatively to the vacuum pump.

A kitchen appliance according to the present invention comprises an assembly according to an embodiment of the present invention, and at least one tool for treating food. Therein, the power unit comprises a drive component configured to drive the tool. In particular, the kitchen appliance may comprise a hand blender and/or a hand mixer. The at least one tool may include a rotatable knife assembly and/or an agitator, for instance.

In the following, advantageous embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: an assembly according to an exemplary embodiment of the present invention in a perspective view;
- Fig. 2:: a portion of the assembly of Figure 1 arranged for use;
- Fig. 3:: a vacuum valve according to an embodiment of the present invention with a container after applying a vacuum thereto;
- Fig. 4a:: a first exemplary embodiment of a vacuum valve according to the present invention in a cross section;
- Fig. 4b:: the vacuum valve of Figure 4a during application of vacuum to a food container;
- Fig. 5a:: a second exemplary embodiment of a vacuum valve according to the present invention in a cross section;
- Fig. 5b:: the vacuum valve of Figure 5a during application of vacuum to a food container;
- Fig. 6a:: a third exemplary embodiment of a vacuum valve according to the present invention in a cross section;
- Fig. 6b:: the vacuum valve of Figure 6a during application of vacuum to a food container; and
- Fig. 6c:: the vacuum valve of Figures 6a, 6b in a perspective view.

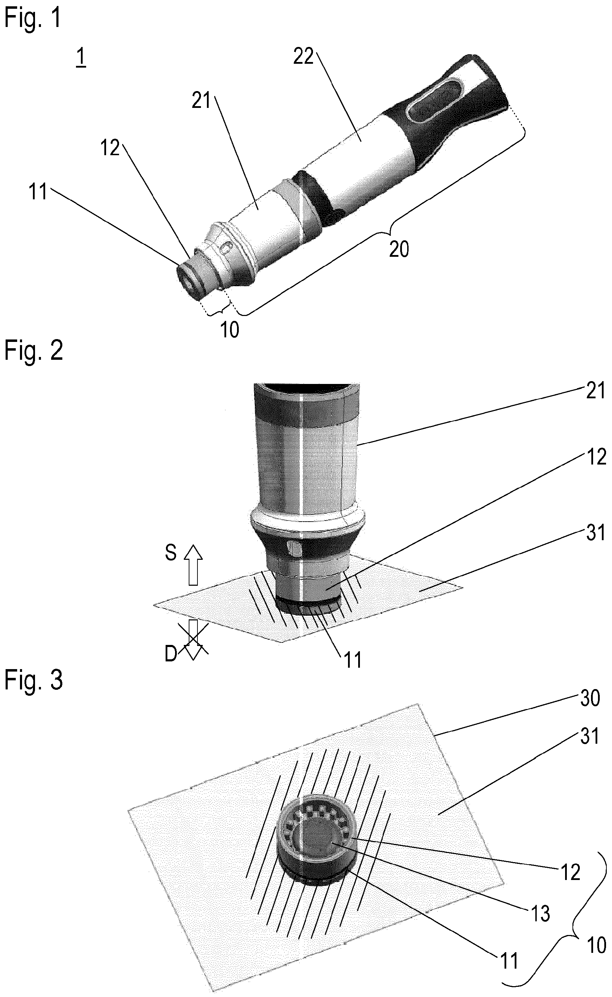

In Figure 1, an assembly 1 according to an exemplary embodiment of the present invention is shown in a perspective view. The assembly 1 comprises a power unit 20 of a kitchen appliance, and a vacuum valve 10 according to the present invention. The vacuum valve 10 in particular comprises a first component 11 and a second component 12. In the situation depicted, the vacuum valve 10 (in particular, the second component 12 thereof) is detachably attached to the power unit 20.

The power unit 20 comprises a vacuum pump 21 and a drive component 22 including an electric motor (not visible) configured to drive the vacuum pump 21. In the example shown in Figure 1, the vacuum pump 21 is detachable from the drive component 22. A tool (not shown) such as a rotatable knife assembly and/or an agitator may be attachable, alternatively to the vacuum pump 21, to the drive component 22. The drive component 22 then preferably is adapted to also drive the tool. In particular, the power unit 20 of the exemplary embodiment shown forms part of a hand blender.

Figure 2 shows a portion of the assembly 1 arranged for use, i.e., ready for applying a vacuum to a food container (such as a bag, in particular a plastic bag), a sheet 31 of which is seen in Figure 2. To this end, the first component 11 has been introduced into the food container and thereafter been combined with the second component 12, with a section of the sheet 31 therebetween. A portion of the vacuum valve 10 encompasses a hole (not visible in Figure 2) in the sheet 31. When the vacuum is applied, the food container is preferably sealed outside the vacuum valve, i.e., said hole is the only opening of the food container: Any further opening possibly provided in the food container (such as an opening for filling the food container) is closed before utilisation of the assembly, such as by at least one closing mechanism (which may include one or more zip/s and/or clip/s) or by welding.

When the vacuum pump 21 is driven, air contained in the food container is sucked, in a sucking direction S through an air channel in the vacuum valve 10 and said hole, out of the food container, such that a vacuum is applied to the food container. By contrast, an air flow through the air channel in a sealing direction is inhibited by the vacuum valve, in particular by a sealing thereof (not visible in Figure 2).

The power unit (in particular the vacuum pump 21 thereof) can be detached from the vacuum valve 10; such situation of detachment is shown in Figure 3, in which also the sealing 13 is visible. The sealing 13 inhibits that the vacuum (i.e., the underpressure) within the food container 30 is released, i.e., that air flows through the vacuum valve in the sealing direction D, thus, from the outside of the food container 30 into an interior thereof.

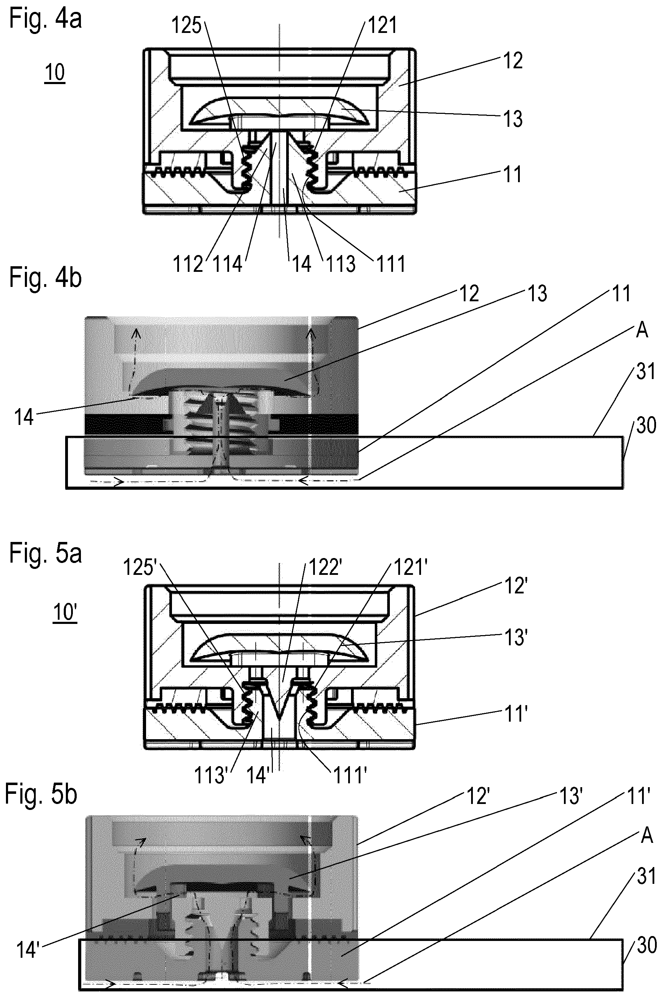

Figure 4a shows the vacuum valve 10 in a cross section. As seen, the first component 11 and the second component 12 each provide of a respective screw thread 111, 121 configured to engage with each other for detachably combining the second component 12 with the first component 11. In particular, in the present example, for combining the second component 12 with the first one, a threaded protrusion 113 of the first component 11 is screwed into a threaded hole 125 of the second component 12. The protrusion 113 includes a portion of an air channel 14 configured to conduct air sucked by the vacuum pump through the vacuum valve.

Moreover, the first component 11 comprises a punch portion 112 configured to generate said hole in said sheet 31 of the food container (see Figures 2, 3) by punching it when the second component 12 is being combined with the first component 11.

In the example depicted, the punch portion 112 includes an air passage 114 forming part of the air channel 14 in the vacuum valve 10.

In Figure 4b, a path air A takes through the vacuum valve 10 when being sucked by the (not shown) vacuum pump is schematically illustrated by dotted lines. Therein, as indicated in the figure by arrows, the air is flowing, during operation of the vacuum pump, from the interior of the food container 30 towards the vacuum pump, thereby flowing through said air channel 14 (in particular through a duct in said protrusion 113 and through said air passage 114) and passing the sealing 13.

Figure 5a shows a vacuum valve 10' according to an alternative embodiment of the present invention in cross section. The vacuum valve 10' comprises a first component 11' to be inserted into a food container, a second component 12' to be combined with the first component 11' with a sheet of the food container at least partially therebetween, and a sealing 13'.

As seen, the first component 11' and the second component 12' each provide of a respective screw thread 111', 121' configured to engage with each other for detachably combining the second component 12' with the first component 11'. In particular, in the present example, for combining the second component 12' with the first one, a threaded protrusion 113' of the first component 11' is screwed into a threaded hole 125' of the second component 12'. The protrusion 113' surrounds a duct being a portion of an air channel 14' formed in the vacuum valve 10' and configured to conduct air sucked by the vacuum pump through the vacuum valve 10'.

In the embodiment depicted in Figure 5a, the second component 12' comprises a punch portion 122' configured to generate said hole in said sheet of the food container by punching it when the second component 12' is being combined with the first component 11'.

In Figure 5b, a path air A takes through the vacuum valve 10' when being sucked by the (not shown) vacuum pump is schematically illustrated by dotted lines. Therein, as indicated in the figure by arrows, the air is flowing, during operation of the vacuum pump, from the interior of the food container 30 through said air channel 14' (in particular through said duct in the protrusion 113') towards the vacuum pump, thereby passing the sealing 13'.

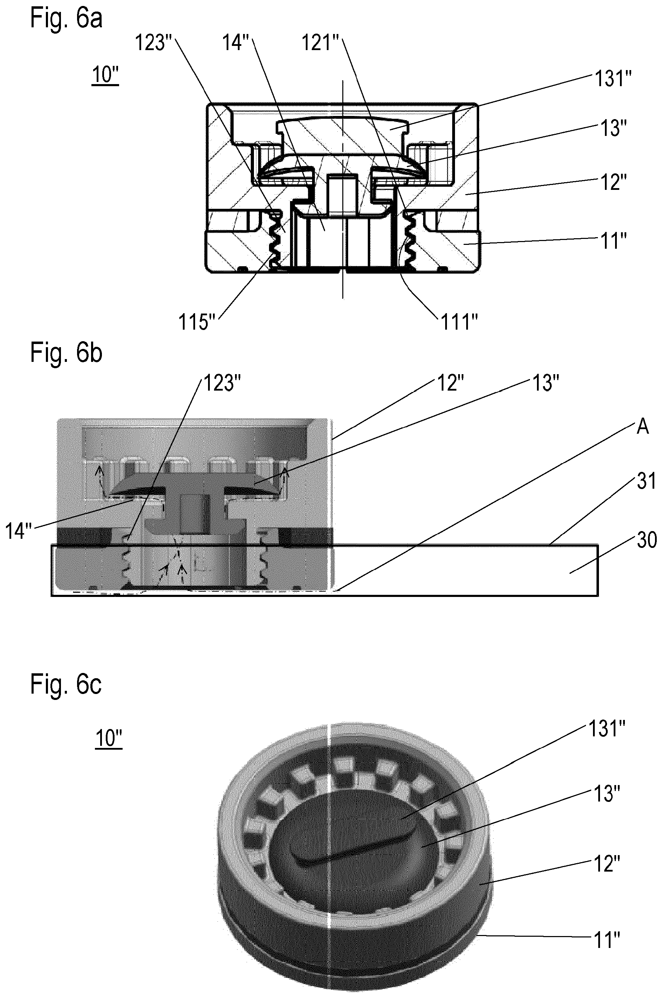

Figure 6a shows a further exemplary embodiment of a vacuum valve 10" according to the present invention in cross section. The vacuum valve 10" comprises a first component 11", a second component 12" and a sealing 13".

The first component 11" and the second component 12" each provide of a respective screw thread 111", 121" configured to engage with each other for detachably combining the second component 12" with the first component 11". In particular, in the present example, for combining the second component 12" with the first one, a threaded protrusion 123" of the second component 12" is screwed into a threaded hole 115" of the first component 11". The protrusion 123" surrounds a duct being a portion of an air channel 14" formed in the vacuum valve 10" and configured to conduct air sucked by the vacuum pump through the vacuum valve 10".

In Figure 6b, a path air A takes through the vacuum valve 10" when thus being sucked by the (not shown) vacuum pump is schematically illustrated by dotted lines. Therein, as indicated by arrows, the air A is flowing, during operation of the vacuum pump, from the interior of the food container 30 through said air channel 14" (in particular through said duct in the protrusion 123") towards the vacuum pump, thereby passing the sealing 13".

At least in utilisation of the vacuum valve 10", when a vacuum has been applied to the food container, the sealing 13‴ inhibits an air flow in a sealing direction through the air channel 14". The inhibiting can be released by a user moving the sealing 13" relative to the first component 11" (and to the second component 12" combined therewith) and thereby opening the air channel 14"; in particular, the vacuum valve 10" thus is a two-way valve. To facilitate said movement, the sealing 13" is provided with a grip 131" configured to be grasped by the user. While the grip 131" is not visible in Figure 6b due to the section thereof, it can be seen in Figures 6a and 6c, the latter figure showing the vacuum valve 10" in a perspective view.

Disclosed is a vacuum valve 10, 10', 10" for a kitchen appliance. The vacuum valve comprises a first component 11, 11', 11", a second component 12, 12', 12" and a sealing 13, 13', 13". The second component is configured to be attached to a power unit 20 of the kitchen appliance, and to be combined with the first component 11, 11', 11", with a sheet 31 at least partially therebetween. The vacuum valve is configured to inhibit, by means of the sealing 13, 13', 13", an air flow through an air channel 14, 14', 14" within the vacuum valve and in a sealing direction D, and to facilitate sucked air A flowing through the air channel 14, 14', 14" in a sucking direction S opposite to the sealing direction D.

Further disclosed are an assembly and a kitchen appliance each comprising such vacuum valve, and a method of utilising the vacuum valve.

### Reference signs

- 1: assembly

- 10, 10', 10": vacuum valve
- 11, 11', 11": first component
- 12, 12', 12": second component
- 13, 13', 13": sealing
- 14, 14', 14": air channel

- 20: power unit
- 21: vacuum pump
- 22: drive component

- 30: food container
- 31: sheet

- 111, 111', 111": screw thread
- 112: punch portion
- 113, 113': protrusion
- 114: air passage
- 115": threaded hole

- 121, 121', 121": screw thread
- 122: punch portion
- 123": protrusion
- 125, 125': threaded hole

- A: air
- S: sucking direction
- D: sealing direction

## Claims

1. Vacuum valve (10, 10', 10") for a kitchen appliance, the vacuum valve comprising
- a first component (11, 11', 11");
- a second component (12, 12', 12") configured to be combined with the first component (11, 11', 11"), with a sheet (31) at least partially therebetween, and to be detachably attached to a power unit (20) of the kitchen appliance; and
- a sealing (13, 13', 13"),
wherein the vacuum valve is configured to inhibit, by means of the sealing (13, 13', 13"), an air flow in a sealing direction (D) through an air channel (14, 14', 14") within the vacuum valve, and to facilitate sucked air (A) flowing through the air channel (14, 14', 14") in a sucking direction (S) opposite to the sealing direction, **characterised in that**
the first component (11) and/or the second component (12') comprises a punch portion (112, 122') configured to generate a hole in said sheet (31) by punching it when the second component (12, 12') is being combined with the first component (11, 11').

2. Vacuum valve according to claim 1, wherein the punch portion (112) includes at least one air passage (114) forming at least part of the air channel (14) in the vacuum valve.

3. Vacuum valve according to one of the preceding claims, wherein the first component (11, 11', 11") and/or the second component (12, 12', 12") comprises a screw thread (111, 111', 111", 121, 121', 121") for detachably combining the second component with the first component.

4. Vacuum valve according to one of the preceding claims, wherein the sealing (13") comprises a grip (131") facilitating movement of the sealing relative to the first component (11") and/or to the second component (12"), so as to enable the air flow in the sealing direction (D).

5. Assembly (1) comprising one or more vacuum valve/s (10, 10', 10") according to one of the preceding claims, and a power unit (20) of a kitchen appliance with a vacuum pump (21), the power unit compatible with the vacuum valve/s.

6. Kitchen appliance with an assembly (1) according to claim 5, and with at least one tool for treating food, wherein the power unit (20) comprises a drive component (22) configured to drive the tool.

7. Kitchen appliance according to claim 6, wherein the kitchen appliance comprises a hand blender or a hand mixer.

8. Method comprising
- combining a second component (12, 12', 12") of a vacuum valve (10, 10', 10") according to one of claims 1 to 5 with a first component (11, 11', 11") thereof, with a sheet (31) of a food container (30) at least partially therebetween;
- attaching the second component (12, 12', 12") to a power unit (20) of a kitchen machine, the power unit comprising a vacuum pump (21);
- applying a vacuum to the food container (30) by operating the vacuum pump (21);
- detaching the second component (12, 12', 12") from the power unit (20) further comprising punching the sheet (31) of the food container (30) by way of combining the first component (11, 11') and the second component (12, 12').

9. Method according to one of claim 8, further comprising introducing the first component (11, 11', 11") of the vacuum valve (10, 10', 10") into a food container (30).

10. Method according to one of claims 8 or 9, wherein the vacuum valve (10") is in accordance with claim 4, the method further comprising releasing the vacuum by moving the sealing relative to the first and/or second component by means of the grip (131").

## Patentansprüche

1. Vakuumventil (10, 10', 10") für ein Küchengerät, wobei das Vakuumventil Folgendes umfasst:
- eine erste Komponente (11, 11', 11"),
- eine zweite Komponente (12, 12', 12"), die so ausgelegt ist, dass sie sich mit der ersten Komponente (11, 11', 11") zusammensetzen lässt, wobei zumindest teilweise eine Folienbahn (31) dazwischen liegt, und sich abnehmbar an einer Leistungseinheit (20) des Küchengeräts anbringen lässt, und
- eine Dichtung (13, 13', 13"),
wobei das Vakuumventil so ausgelegt ist, dass es mithilfe der Dichtung (13, 13', 13") einen Luftstrom in Abdichtrichtung (D) durch einen Luftkanal (14, 14', 14") im Vakuumventil verhindert und ein Strömen von angesaugter Luft (A) durch den Luftkanal (14, 14', 14") in einer der Abdichtrichtung entgegengesetzten Ansaugrichtung (S) ermöglicht,
**dadurch gekennzeichnet, dass**
die erste Komponente (11) und/oder die zweite Komponente (12') einen Durchstechteil (112, 122') umfasst, der so ausgelegt ist, dass er ein Loch in der Folienbahn (31) erzeugt, indem er sie durchsticht, wenn die zweite Komponente (12, 12') mit der ersten Komponente (11, 11') zusammengesetzt wird.

2. Vakuumventil nach Anspruch 1, wobei der Durchstechteil (112) mindestens einen Luftdurchgang (114) aufweist, der zumindest einen Teil des Luftkanals (14) in dem Vakuumventil bildet.

3. Vakuumventil nach einem der vorhergehenden Ansprüche, wobei die erste Komponente (11, 11', 11") und/oder die zweite Komponente (12, 12', 12") ein Schraubgewinde (111, 111', 111", 121, 121', 121") zum abnehmbaren Zusammensetzen der zweiten Komponente mit der ersten Komponente umfasst.

4. Vakuumventil nach einem der vorhergehenden Ansprüche, wobei die Dichtung (13") einen Griff (131") umfasst, der ein Bewegen der Dichtung in Bezug auf die erste Komponente (11") und/oder die zweite Komponente (12") und so den Luftstrom in Abdichtrichtung (D) ermöglicht.

5. Anordnung (1), die ein oder mehrere Vakuumventile (10, 10', 10") nach einem der vorhergehenden Ansprüche und eine Leistungseinheit (20) eines Küchengeräts mit einer Vakuumpumpe (21) umfasst, wobei die Leistungseinheit mit den Vakuumventilen kompatibel ist.

6. Küchengerät mit einer Anordnung (1) nach Anspruch 5 und mindestens einem Werkzeug zum Verarbeiten von Lebensmitteln, wobei die Leistungseinheit (20) eine Antriebskomponente (22) umfasst, die so ausgelegt ist, dass sie das Werkzeug antreibt.

7. Küchengerät nach Anspruch 6, wobei das Küchengerät einen Pürierstab oder einen Handmixer umfasst.

8. Verfahren, das Folgendes umfasst:
- Zusammensetzen einer zweiten Komponente (12, 12', 12") eines Vakuumventils (10, 10', 10") nach einem der Ansprüche 1 bis 5 mit einer ersten Komponente (11, 11', 11") davon, wobei zumindest teilweise eine Folienbahn (31) eines Lebensmittelbehälters (30) dazwischen liegt,
- Anbringen der zweiten Komponente (12, 12', 12") an einer Leistungseinheit (20) einer Küchenmaschine, wobei die Leistungseinheit eine Vakuumpumpe (21) umfasst,
- Erzeugen eines Vakuums in dem Lebensmittelbehälter (30) durch Betreiben der Vakuumpumpe (21),
- Abnehmen der zweiten Komponente (12, 12', 12") von der Leistungseinheit (20), und ferner das Durchstechen der Folienbahn (31) des Lebensmittelbehälters (30) durch Zusammensetzen der ersten Komponente (11, 11') und der zweiten Komponente (12, 12') umfasst.

9. Verfahren nach Anspruch 8, das ferner das Einbringen der ersten Komponente (11, 11', 11") des Vakuumventils (10, 10', 10") in einen Lebensmittelbehälter (30) umfasst.

10. Verfahren nach einem der Ansprüche 8 und 9, wobei das Vakuumventil (10") Anspruch 4 entspricht, wobei das Verfahren ferner das Aufheben des Vakuums durch Bewegen der Dichtung in Bezug auf die erste und/oder die zweite Komponente mithilfe des Griffs (131") umfasst.

## Revendications

1. Soupape sous vide (10, 10', 10") pour un appareil de cuisine, la soupape sous vide comprenant
- un premier composant (11, 11', 11") ;
- un deuxième composant (12, 12', 12") configuré pour être associé au premier composant (11, 11', 11"), avec une feuille (31) au moins partiellement entre ceux-ci, et pour être fixé de façon amovible à une unité d'alimentation (20) de l'appareil de cuisine ; et
- un scellage (13, 13', 13"),
dans laquelle la soupape sous vide est configurée pour empêcher, au moyen du scellage (13, 13', 13"), un écoulement d'air dans une direction de scellage (D) à travers un conduit d'air (14, 14', 14") à l'intérieur de la soupape sous vide, et pour faciliter l'écoulement de l'air aspiré (A) à travers le conduit d'air (14, 14', 14") dans une direction d'aspiration (S) opposée à la direction de scellage, **caractérisée en ce que** le premier composant (11) et/ou le deuxième composant (12') comprend/comprennent une partie de poinçonnage (112, 122') configurée pour générer un orifice dans ladite feuille (31) en la poinçonnant lorsque le deuxième composant (12, 12') est associé au premier composant (11, 11').

2. Soupape sous vide selon la revendication 1, dans laquelle la partie de poinçonnage (112) comprend au moins un passage d'air (114) formant au moins une partie du conduit d'air (14) dans la soupape sous vide.

3. Soupape sous vide selon l'une des revendications précédentes, dans laquelle le premier composant (11, 11', 11") et/ou le deuxième composant (12, 12', 12") comprend/comprennent un filetage de vis (111, 111', 111", 121, 121', 121") pour l'association amovible du deuxième composant au premier composant.

4. Soupape sous vide selon l'une des revendications précédentes, dans laquelle le scellage (13") comprend une poignée (131") facilitant le mouvement du scellage par rapport au premier composant (11") et/ou au deuxième composant (12"), de sorte à permettre l'écoulement de l'air dans la direction de scellage (D).

5. Assemblage (1) comprenant une ou plusieurs soupape(s) sous vide (10, 10', 10") selon l'une des revendications précédentes, et une unité d'alimentation (20) d'un appareil de cuisine avec une pompe sous vide (21), l'unité d'alimentation étant compatible avec la ou les soupape(s) sous vide.

6. Appareil de cuisine avec un assemblage (1) selon la revendication 5, et avec au moins un outil pour traiter des aliments, dans lequel l'unité d'alimentation (20) comprend un composant d'entraînement (22) configuré pour entraîner l'outil.

7. Appareil de cuisine selon la revendication 6, dans lequel l'appareil de cuisine comprend un mélangeur à main ou un batteur à main.

8. Procédé comprenant
- l'association d'un deuxième composant (12, 12', 12") d'une soupape sous vide (10, 10', 10") selon l'une des revendications 1 à 5 à un premier composant (11, 11', 11") de celle-ci, avec une feuille (31) d'un contenant alimentaire (30) au moins partiellement entre ceux-ci ;
- la fixation du deuxième composant (12, 12', 12") à une unité d'alimentation (20) d'un robot de cuisine, l'unité d'alimentation comprenant une pompe sous vide (21) ;
- l'application d'un vide au contenant alimentaire (30) en actionnant la pompe sous vide (21) ;
- la séparation du deuxième composant (12, 12', 12") de l'unité d'alimentation (20) comprenant en outre le poinçonnage de la feuille (31) du contenant alimentaire (30) en combinant le premier composant (11, 11') et le deuxième composant (12, 12').

9. Procédé selon la revendication 8, comprenant en outre l'introduction du premier composant (11, 11', 11") de la soupape sous vide (10, 10', 10") dans un contenant alimentaire (30).

10. Procédé selon l'une des revendications 8 ou 9, dans lequel la soupape sous vide (10") est conforme à la revendication 4, le procédé comprenant en outre la libération du vide en déplaçant le scellage par rapport au premier et/ou au deuxième composant au moyen de la poignée (131").
